# EUROPEAN PATENT APPLICATION

(11) **EP 4 664 611 A1**
(43) Date of publication of application: **17.12.2025**
(21) Application number: 25178243.9
(22) Date of filing: 22.05.2025
(51) Int. Cl.: H01M 10/653, H01M 10/658, H01M 50/489, H01M 50/474, H01M 50/35, H01M 50/209, H01M 10/647

(54) **HEAT INSULATOR AND BATTERY MODULE INCLUDING THE SAME**

(30) Priority: 14.06.2024 JP 2024096720
(71) Applicant: Prime Planet Energy & Solutions, Inc., Chuo-ku, Tokyo 103-0022 (JP)
(72) Inventor: OMURA, Tetsuji, Tokyo, 103-0022 (JP); KOGAMI, Nao, Tokyo, 103-0022 (JP)
(74) Representative: Kuhnen & Wacker Patent- und Rechtsanwaltsbüro PartG mbB

(57) **Abstract**

A battery module includes battery cells each of which includes a pair of broad width surfaces and that are arranged such that the broad width surfaces are opposed to each other and a heat insulator arranged between an adjacent pair of battery cells. The heat insulator includes a heat insulating sheet and a buffer sheet bonded to the heat insulating sheet. The heat insulating sheet is formed of a material that can be more easily compressively deformed than the heat insulating sheet. The heat insulating sheet includes a recessed portion in a surface to which the buffer sheet is bonded.

## Description

### BACKGROUND

The present disclosure relates to a heat insulator and a battery module including the heat insulator.

Japanese Laid-open Patent Publication No. 2021-140968 discloses a heat insulator for a battery, the heat insulator including a heat insulating portion arranged to be opposed to a surface of a battery and a buffer portion that can be more easily compressively deformed than the heat insulating portion, and at least a portion of the buffer portion is arranged in a position closer to the surface of the battery than the heat insulating portion. According to Japanese Laid-open Patent Publication No. 2021-140968, for example, even when the battery expands, the heat insulator for the battery is properly compressively deformed following expansion of the battery, and therefore, expansion of the battery is not excessively suppressed.

### SUMMARY

Incidentally, when an expansion amount of the battery increases, a force of the battery that compresses the heat insulator increases. When the force of the battery that compresses the heat insulator increases, distortions are accumulated in the buffer portion and a reaction force of the heat insulator that presses back the battery increases. When the reaction force increases, a problem arises in which a large-scale restraining member is necessary to cope with the reaction force, and therefore, size and weight of the battery module are increased.

A heat insulator disclosed herein is arranged between an adjacent pair of battery cells of a battery module. The heat insulator includes a heat insulating sheet, and a buffer sheet bonded to the heat insulating sheet. The buffer sheet is formed of a material that can be more easily compressively deformed than the heat insulating sheet. The heat insulating sheet includes a recessed portion in a surface to which the buffer sheet is bonded. According to the heat insulator, when the battery cells expand and the heat insulator is compressively deformed, the buffer sheet is deformed such that a portion of the buffer sheet enters the recessed portion, so that a distortion that is accumulated in the buffer sheet is released. Thus, a reaction force of the heat insulator that presses back a battery is reduced. As a result, a strength of a restraining member can be reduced, and mass and size of the battery module can be reduced.

### BRIEF DESCRIPTION OF THE DRAWINGS

FIG. 1 is a plan view schematically illustrating a battery module according to one preferred embodiment.
FIG. 2 is a cross-sectional view taken along the line A-A of FIG. 1.
FIG. 3 is a front view schematically illustrating a heat insulating sheet.
FIG. 4 is a front view schematically illustrating a buffer sheet.
FIG. 5 is a front view schematically illustrating a heat insulator when viewed from a buffer sheet side.
FIG. 6 is a cross-sectional view taken along the line B-B of FIG. 5.
FIG. 7 is a cross-sectional view schematically illustrating the heat insulator when a battery cell expands.
FIG. 8 is a front view schematically illustrating a heat insulator according to another preferred embodiment.
FIG. 9 is a front view schematically illustrating a heat insulator according to another preferred embodiment.
FIG. 10 is a front view schematically illustrating a heat insulator according to another preferred embodiment.
FIG. 11 is a front view schematically illustrating a heat insulator according to another preferred embodiment.
FIG. 12 is a cross-sectional view taken along the line D-D of FIG. 11.

### DETAILED DESCRIPTION OF THE PREFERRED EMBODIMENTS

Preferred embodiments of a technology disclosed herein will be described below with reference to the accompanying drawings. As a matter of course, the preferred embodiments described herein are not intended to be particularly limiting the present disclosure. The accompanying drawings are schematic and do not necessarily reflect actual members or portions. Members/portions that have the same effect will be denoted by the same sign as appropriate, and the overlapping description will be omitted as appropriate. The notation "A to B" that indicates a numerical range means "A or more and B or less," unless specifically stated otherwise. In the following description, the reference signs "X," Y," and "Z" in the drawings respectively denote a thickness direction of a battery module 10, a width direction that is orthogonal to the thickness direction, and a height direction that is orthogonal to the thickness direction and the width direction. However, these are merely directions used for convenience of description, and do not limit an installation form of the battery module 10.

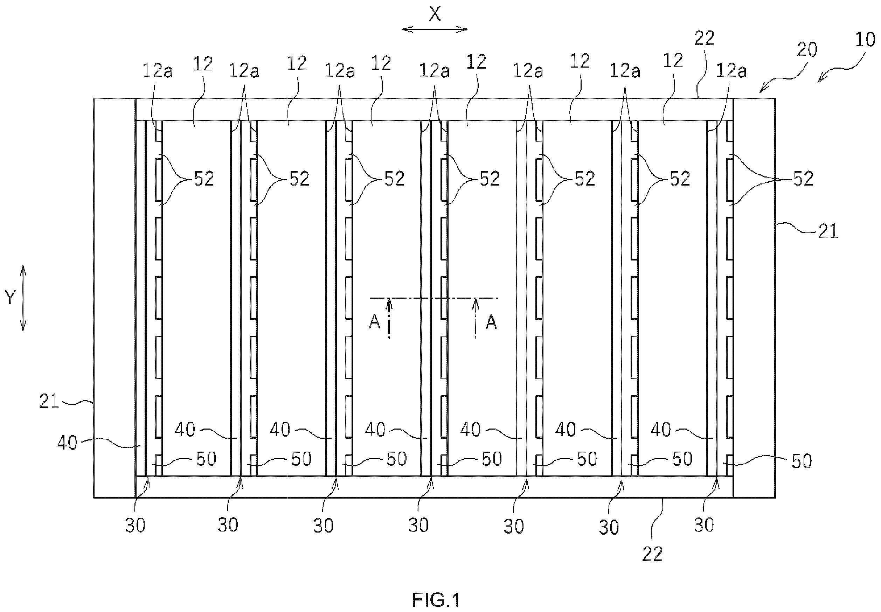

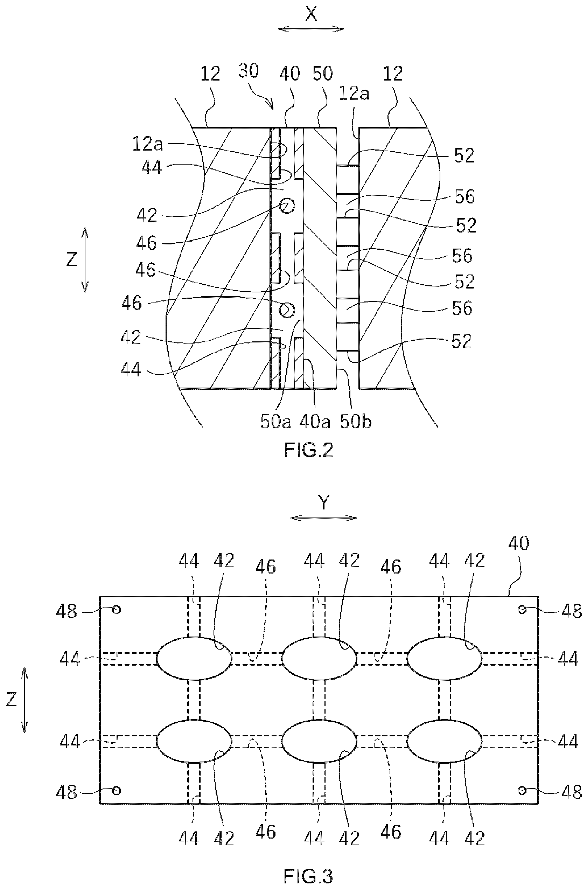

FIG. 1 is a plan view schematically illustrating the battery module 10. FIG. 2 is a cross-sectional view taken along the line A-A of FIG. 1. As illustrated in FIG. 1, the battery module 10 includes multiple battery cells 12, a restraining member 20, and a heat insulator 30. Note that, in FIG. 1, a view in which six battery cells 12 are arranged is illustrated, but the number of battery cells 12 of the battery module 10 is not limited thereto.

The battery cell 12 includes a pair of broad width surfaces 12a. In this preferred embodiment, the battery cell 12 is a so-called rectangular battery cell including a rectangular case having an approximately rectangular parallelepiped shape. Note that the battery cell 12 may be a laminate battery cell covered with a laminate film. The multiple battery cells 12 are arranged such that the broad width surfaces 12a are opposed to each other. The multiple battery cells 12 are arranged in an X-direction.

Herein, the term "battery cell" means a smallest unit of an electricity storage device. The term "electricity storage device" refers to a device that can be charged and discharged. The electricity storage device encompasses, in addition to a battery that is, in general, referred to as a lithium-ion battery, a lithium secondary battery, or the like, a battery, such as a lithium polymer battery or the like. The term "secondary battery" refers to a battery in general that can be repeatedly charged and discharged as charge carriers move between positive and negative electrodes. An electrolytic solution may be used for the electricity storage device, and a solid electrolyte may be used for the electricity storage device. For example, the secondary battery may be a so-called liquid secondary battery in which an electrolytic solution is used, and may be a so-called all-solid battery in which a solid electrolyte is used. The term "battery module" is an electricity storage device in which multiple battery cells are incorporated.

The restraining member 20 constrains the multiple battery cells 12 arranged such that the broad width surfaces 12a are opposed to each other and the heat insulators 30 each of which is arranged between the corresponding battery cells 12. The restraining member 20 is configured such that a desired constraining pressure acts on the arranged multiple battery cells 12 and the heat insulators 30. The restraining member 20 includes a pair of end plates 21, a pair of side plates 22, and multiple screws. Note that, in FIG. 1, the screws are not illustrated. The end plates 21 are arranged at both ends of the arranged multiple battery cells 12 in the X direction. The multiple battery cells 12 are sandwiched between the end plates 21 in the X direction. The side plates 22 are arranged at both ends of the battery cells 12 in a Y direction. The side plates 22 are fastened to the end plates 21 by the multiple screws such that a desired constraining pressure acts on the battery cells 12 and the heat insulators 30. There is no particular limitation on materials of the end plates 21 and the side plates 22. For example, the end plates 21 and the side plates 22 may be formed of an aluminum alloy. Note that a configuration of the restraining member 20 is not limited thereto and a configuration employed for the battery module can be employed.

As illustrated in FIG. 1 and FIG. 2, the heat insulator 30 is arranged between an adjacent pair of battery cells 12. The heat insulator 30 is a member that suppresses heat conduction between the adjacent pair of battery cells 12. For example, when one of the adjacent pair of battery cells 12 abnormally generates heat, the heat insulator 30 suppresses heat conduction to the other one of the battery cells 12. In this preferred embodiment, as illustrated in FIG. 1, the heat insulator 30 is arranged between each of the battery cells 12 at both ends in the X direction and a corresponding one of the end plates 21, but the heat insulator 30 may not be arranged therebetween. The heat insulator 30 includes a heat insulating sheet 40 and a buffer sheet 50.

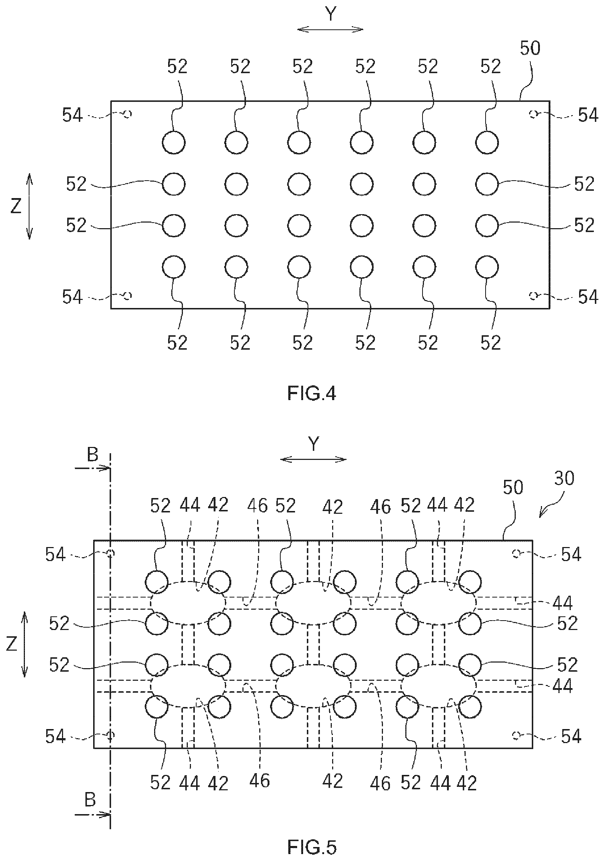

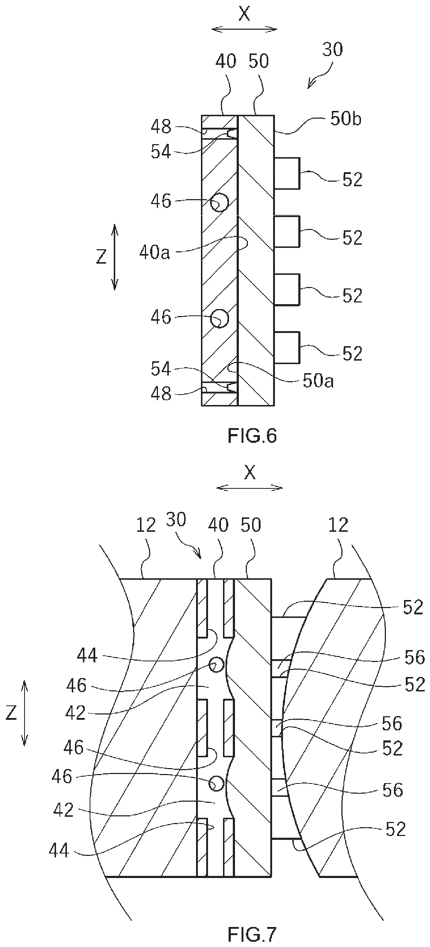

FIG. 3 is a front view schematically illustrating the heat insulating sheet 40. FIG. 4 is a front view schematically illustrating the buffer sheet 50. FIG. 5 is a front view schematically illustrating the heat insulator 30 including the heat insulating sheet 40 and the buffer sheet 50 bonded to each other. In FIG. 5, the heat insulator 30 when viewed from a buffer sheet 50 side is illustrated. FIG. 6 is a cross-sectional view taken along the line B-B of FIG. 5.

The heat insulating sheet 40 gives a desired heat insulating capacity to the heat insulator 30. The heat insulating sheet 40 is preferably formed of a material having low heat conductivity. For example, a material of the heat insulating sheet 40 is preferably an inorganic fiber, such as glass wool or the like. Note that the material of the heat insulating sheet 40 may be a material including an in organic fiber and an organic binder, a material including an inorganic fiber and inorganic powder, a material including an inorganic filler and an organic binder, or the like. The material of the heat insulating sheet 40 may be aerogel, silicon form, or the like.

In a form illustrated in FIG. 3, the heat insulating sheet 40 is formed into a rectangular parallelepiped shape. In this preferred embodiment, as illustrated in FIG. 1, a width of the heat insulating sheet 40 is substantially equal to a width of the battery cell 12. In this preferred embodiment, as illustrated in FIG. 2, a height of the heat insulating sheet 40 is substantially equal to a height of the battery cell 12. That is, the heat insulating sheet 40 is formed to have a substantially same size as that of the broad width surface 12a of the battery cell 12. As used herein, the term "width" refers to a length in the Y direction, and the term "height" refers to a length in a Z direction.

There is no particular limitation on a thickness of the heat insulating sheet 40. As used herein, the term "thickness" refers to a length in the X direction. When the thickness of the heat insulating sheet 40 is increased, a size of the battery module 10 is increased, but the heat insulating capacity of the heat insulator 30 is increased. When the thickness of the heat insulating sheet 40 is reduced, the heat insulating capacity of the heat insulator 30 is reduced, but the size of the battery module 10 can be reduced. The thickness of the heat insulating sheet 40 can be changed as appropriate in consideration of the above-described issues. For example, the thickness of the heat insulating sheet 40 is preferably 1 mm to 10 mm, and is more preferably 1 mm to 4 mm.

As illustrated in FIG. 3, the heat insulating sheet 40 includes a recessed portion 42 in a surface 40a to which the buffer sheet 50 is bonded. In this preferred embodiment, the recessed portion 42 is formed of a through hole that passes through the heat insulating sheet 40 in the X direction. Although there is no particular limitation on a shape of the through hole, in this preferred embodiment, the through hole is formed into an elliptic shape. A minor axis of the recessed portion 42 is preferably 20 mm or less and is more preferably 15 mm or less. Note that the shape of the recessed portion 42 may be a circular shape and may be a rectangular shape. There is no particular limitation on the number of recessed portions 42. In this preferred embodiment, the heat insulating sheet 40 includes six recessed portions 42. Although there is no particular limitation on arrangement of the recessed portions 42, the recessed portions 42 are preferably equally arranged on the surface 40a to which the buffer sheet 50 is bonded.

The heat insulating sheet 40 includes a ventilation passage 44 that connects a corresponding one of the recessed portions 42 and a peripheral portion of the heat insulating sheet 40. Thus, air flows between the recessed portion 42 and the peripheral portion of the heat insulating sheet 40 through the ventilation passage 44. In this preferred embodiment, the ventilation passage 44 is a through hole formed inside the heat insulating sheet 40. The ventilation passage 44 extends from the recessed portion 42 in the Y direction or the Z direction. Although there is no particular limitation on a cross-sectional shape of the ventilation passage 44, in this preferred embodiment, the ventilation passage 44 is formed to have a circular cross section. There is no particular limitation on a diameter of the ventilation passage 44. For example, the diameter of the ventilation passage 44 may be about a half of the thickness of the heat insulating sheet 40.

In this preferred embodiment, the heat insulating sheet 40 includes a ventilation passage 46 that connects the recessed portions 42 to each other. Thus, as compared to a case where the heat insulating sheet 40 does not include the ventilation passage 46, air can easily flow in the heat insulating sheet 40. In this preferred embodiment, similar to the ventilation passage 44, the ventilation passage 46 is a circular though hole formed inside the heat insulating sheet 40. There is no particular limitation on a diameter of the ventilation passage 46, and the diameter of the ventilation passage 46 may be the same as the diameter of the ventilation passage 44. Note that the heat insulating sheet 40 may not include the ventilation passage 46.

As illustrated in FIG. 3, the heat insulating sheet 40 includes a positioning hole 48. The positioning hole 48 is formed in the surface 40a to which the buffer sheet 50 is bonded. There is no particular limitation on arrangement of the positioning hole 48. In this preferred embodiment, the positioning hole 48 is provided at each of four corners of the heat insulating sheet 40. In this preferred embodiment, each of the positioning holes 48 is a circular through hole. Note that the positioning hole 48 may be a stop hole, not a through hole.

The buffer sheet 50 is formed of a material that can be more easily compressively deformed than the heat insulating sheet 40. As a material of the buffer sheet 50, various types of rubber materials or the like may be preferably used. The buffer sheet 50 is preferably formed of silicone rubber, fluorine rubber, urethane rubber, natural rubber, styrene-butadiene rubber, butyl rubber, ethylene-propylene rubber, butadiene rubber, isoprene rubber, norbomene rubber, or the like. The buffer sheet 50 is particularly preferably formed of silicone rubber or fluorine rubber.

The buffer sheet 50 is bonded to the heat insulating sheet 40. For example, the buffer sheet 50 is bonded to the heat insulating sheet 40 with an adhesive, a double-sided tape, or the like. Herein, the buffer sheet 50 is provided to reduce a reaction force of the heat insulator 30 that presses back the battery cell 12 when the battery cell 12 expands.

In a form illustrated in FIG. 4, the buffer sheet 50 is formed into a rectangular parallelepiped shape. There is no particular limitation on a width of the buffer sheet 50. In this preferred embodiment, as illustrated in FIG. 1, the width of the buffer sheet 50 is substantial equal to the width of the heat insulating sheet 40. Note that the width of the buffer sheet 50 may be smaller than the width of the heat insulating sheet 40. Also, there is no particular limitation on a height of the buffer sheet 50. In this preferred embodiment, as illustrated in FIG. 2, the height of the buffer sheet 50 is substantially equal to the height of the heat insulating sheet 40. Note that the height of the buffer sheet 50 may be smaller than the height of the heat insulating sheet 40. There is also no particular limitation on a thickness of the buffer sheet 50. The thickness of the buffer sheet 50 is preferably 1 mm to 10 mm. The thickness of the buffer sheet 50 is particularly preferably 1 mm to 4 mm. The thickness of the buffer sheet 50 may be larger than the thickness of the heat insulating sheet 40 and may be smaller than the thickness of the heat insulating sheet 40. The thickness of the buffer sheet 50 may be equal to the thickness of the heat insulating sheet 40.

In the form illustrated in FIG. 4, the buffer sheet 50 includes a protruding portion 52 on a surface 50b at an opposite side to a surface 50a to which the heat insulating sheet 40 is bonded. The protruding portion 52 is pressed by the battery cell 12 when the battery cell 12 expands. Although there is no particular limitation on a shape of the protruding portion 52, in this preferred embodiment, the protruding portion 52 is formed into a columnar shape. However, the protruding portion 52 may have an elliptic shape, a rectangular parallelepiped shape, or the like. There is no particular limitation on a diameter of the protruding portion 52. In this preferred embodiment, as illustrated in FIG. 5, the diameter of the protruding portion 52 is smaller than the minor axis of the recessed portion 42. In this preferred embodiment, the protruding portion 52 is provided such that a portion of the protruding portion 52 overlaps with the recessed portion 42 when the heat insulator 30 is viewed from the X direction. There is no particular limitation on the number and arrangement of the protruding portions 52. Similar to the recessed portions 42, the protruding portions 52 are preferably equally arranged. In this preferred embodiment, 24 protruding portions 52 are equally arranged on the buffer sheet 50. In this preferred embodiment, four protruding portions 52 are arranged in one line in the Z direction, and six protruding portions 52 are arranged in the Y direction. Note that there is a tendency that, when battery cell 12 expands and the heat insulator 30 is compressed, a portion of the buffer sheet 50 is deformed to enter the recessed portion 42 and the protruding portion 52 is inclined toward the recessed portion 42. In order to reduce positional displacement between the buffer sheet 50 and the heat insulating sheet 40 that results accordingly, the protruding portion 52 is preferably arranged in a position symmetric to the recessed portion 42, when viewed from the X direction.

In a form illustrated in FIG. 6, the buffer sheet 50 includes a positioning projecting portion 54 that protrudes on the surface 50a to which the heat insulating sheet 40 is bonded. The positioning projecting portion 54 is inserted in the positioning hole 48. The positioning projecting portion 54 is arranged to overlap with the positioning hole 48 when viewed from the X direction. In this preferred embodiment, as illustrated in FIG. 4, the positioning projecting portion 54 is provided at each of four corners of the buffer sheet 50. There is no particular limitation on a shape of the positioning projecting portion 54. In this preferred embodiment, as illustrated in FIG. 6, the positioning projecting portion 54 is formed into a truncated conical shape. The positioning projecting portion 54 has a diameter that reduces as it goes toward a tip. Note that the shape of the positioning projecting portion 54 may be a columnar shape or the like. A diameter of a bottom surface of the positioning projecting portion 54 is preferably substantially the same as a diameter of the positioning hole 48. Since the tip of the positioning projecting portion 54 is small, the positioning projecting portion 54 can be easily inserted in the positioning hole 48 provided in the heat insulating sheet 40. Also, the diameter of the bottom surface of the positioning projecting portion 54 is equal to the diameter of the positioning hole 48 of the heat insulating sheet 40, and thus, the heat insulating sheet 40 and the buffer sheet 50 can be caused to accurately overlap with each other.

FIG. 7 is a cross-sectional view schematically illustrating the heat insulator 30 when the battery cell 12 expands. When the battery cell 12 expands, the protruding portion 52 of the buffer sheet 50 is pressed by the battery cell 12 and the buffer sheet 50 is compressed. At this time, the buffer sheet 50 is deformed to enter the recessed portion 42 of the heat insulating sheet 40. Further, in this preferred embodiment, the heat insulating sheet 40 includes the ventilation passages 44 and 46. Therefore, when the buffer sheet 50 enters the recessed portion 42, a portion of air staying in the recessed portion 42 is pressed to the peripheral portion of the heat insulating sheet 40 through the ventilation passages 44 and 46,

According to this preferred embodiment, the heat insulator 30 is arranged between an adjacent pair of battery cells 12 of the battery module 10. The heat insulator 30 includes the heat insulating sheet 40 and the buffer sheet 50 bonded to the heat insulating sheet 40. The buffer sheet 50 is formed of a material that can be more easily compressively deformed than the heat insulating sheet 40. The heat insulating sheet 40 includes the recessed portion 42 in the surface 40a to which the buffer sheet 50 is bonded. Thus, when the battery cell 12 expands and the heat insulator 30 is compressed, the buffer sheet 50 is deformed to enter the recessed portion 42. Therefore, the reaction force of the heat insulator 30 that presses back the battery cell 12 can be reduced.

According to this preferred embodiment, the recessed portion 42 is formed of a through hole that passes through the heat insulating sheet 40. Therefore, the recessed portion 42 can be formed in the heat insulating sheet 40 by simple machine processing. Since the recessed portion 42 is a through hole, as compared to a case where the recessed portion 42 is a stop hole, a volume of the recessed portion 42 that the buffer sheet 50 enters can be sufficiently ensured. Specifically, when the thickness of the heat insulating sheet 40 is smaller than that of the buffer sheet 50, the volume of the recessed portion 42 is relatively small with respect to a volume of the buffer sheet 50, and therefore, the recessed portion 42 is preferably a through hole.

Incidentally, in a case where the heat insulating sheet 40 does not include the ventilation passages 44 and 46, when the buffer sheet 50 is deformed to enter the recessed portion 42, there is no way for the air in the recessed portion 42 to escape. Therefore, the air in the recessed portion 42 is compressed by the buffer sheet 50. Moreover, it can be more likely that the buffer sheet 50 is difficult to be deformed to enter the recessed portion 42.

According to this preferred embodiment, the heat insulating sheet 40 includes the ventilation passages 44 and 46 that connect the recessed portions 42 and the peripheral portion of the heat insulating sheet 40. When the buffer sheet 50 enters the recessed portion 42, the air staying in the recessed portion 42 can flow to the peripheral portion of the heat insulating sheet 40 through the ventilation passages 44 and 46. Thus, as compared to a case where the heat insulating sheet 40 does not include the ventilation passages 44 and 46, the buffer sheet 50 can be easily deformed to enter the recessed portion 42. Moreover, the air staying in the recessed portion 42 flows to the peripheral portion of the heat insulating sheet 40, heat generated from the battery cell 12 can be easily released.

According to this preferred embodiment, the buffer sheet 50 includes the protruding portion 52 on the surface 50b at the opposite side to the surface 50a to which the heat insulating sheet 40 is bonded. Thus, gaps 56 are generated between other portions of the buffer sheet 50 than the protruding portions 52 and the battery cell 12. Therefore, when the battery cell 12 expands and the buffer sheet 50 is compressed, the buffer sheet 50 can be deformed toward the gaps 56. The heat insulator 30 can be easily compressively deformed properly following expansion of the battery cell 12.

According to this preferred embodiment, a portion of the protruding portion 52 overlaps with the recessed portion 42 when viewed from the X direction. Thus, the buffer sheet 50 can be easily deformed to enter the recessed portion 42 of the heat insulating sheet 40.

According to this preferred embodiment, the buffer sheet 50 includes the positioning projecting portion 54 that protrudes on the surface 50a to which the heat insulating sheet 40 is bonded. The heat insulating sheet 40 includes the positioning hole 48 to which the positioning projecting portion 54 is inserted. Thus, positioning of the buffer sheet 50 with respect to the heat insulating sheet 40 can be performed. In bonding the heat insulating sheet 40 and the buffer sheet 50, the heat insulating sheet 40 can be prevented from moving relative to the buffer sheet 50. It is easily to bond the heat insulating sheet 40 and the buffer sheet 50 such that a portion of the protruding portion 52 overlaps with the recessed portion 42 when viewed from the X direction.

One preferred embodiment of the technology proposed herein has been described above. However, the preferred embodiment described above is merely an example, and the technology proposed herein can be implemented in various other preferred embodiments.

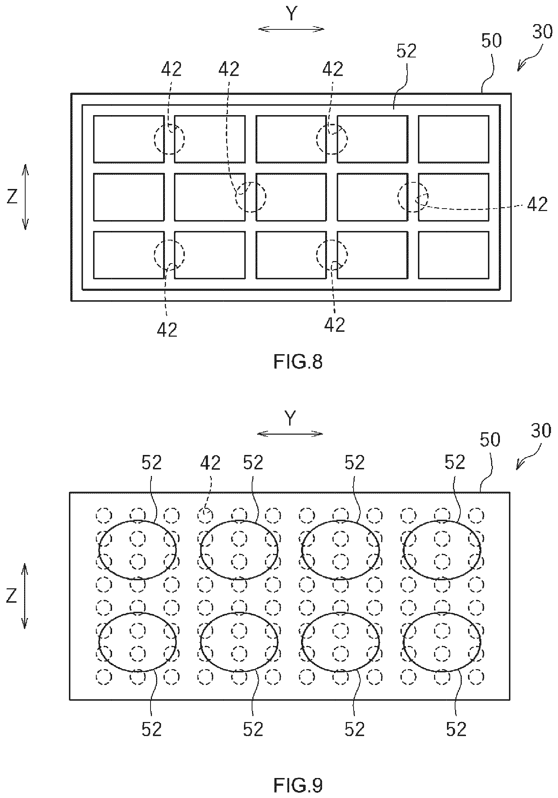

FIG. 8 to FIG. 10 are front view schematically illustrating heat insulators 30 according to other preferred embodiments. In each of FIG. 8 to FIG. 10, the heat insulator 30 when viewed from the buffer sheet 50 side is illustrated. As illustrated in FIG. 8, the protruding portion 52 may be formed in a lattice shape. The recessed portion 42 may be arranged such that at least a portion of the recessed portion 42 overlaps with the protruding portion 52. The recessed portion 42 may be formed of a circular through hole.

As illustrated in FIG. 9, the protruding portion 52 may be formed into an elliptic columnar shape and the recessed portion 42 may be formed of a circular through hole. The minor axis of the protruding portion 52 may be larger than the diameter of the recessed portion 42. The protruding portions 52 may be provided such that one protruding portion 52 overlaps with multiple recessed portions 42.

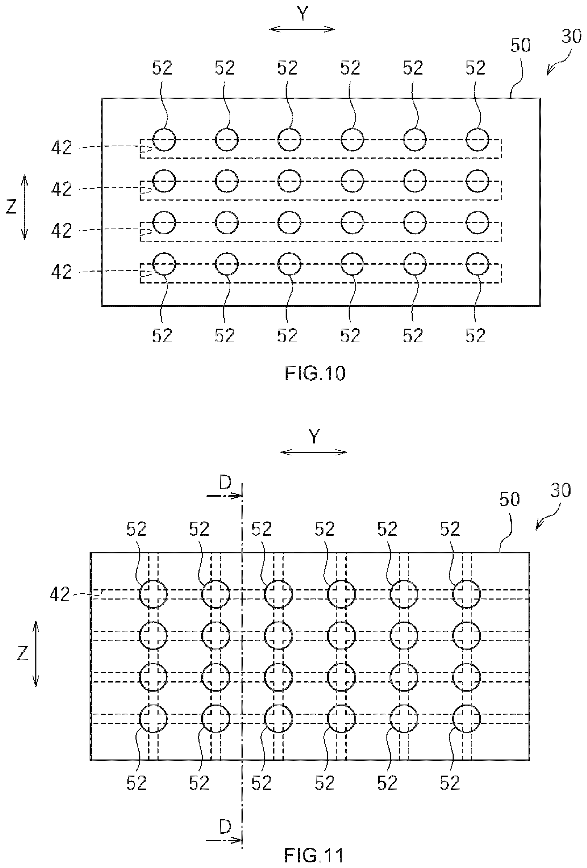

As illustrated in FIG. 10, the recessed portion 42 may be formed of a rectangular through hole. When the recessed portion 42 is formed of a rectangular through hole, a length of a short side of the recessed portion 42 is preferably 20 mm or less, and is more preferably 15 mm or less.

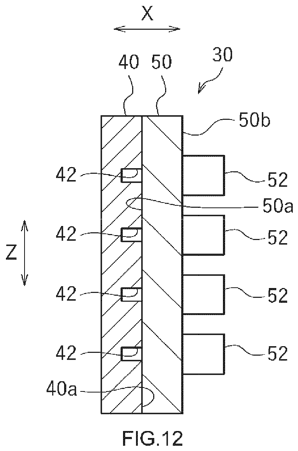

FIG. 11 is a front view schematically illustrating the heat insulator 30 according to still another preferred embodiment. In FIG. 11, the heat insulator 30 when viewed from the 50b side is illustrated. FIG. 12 is a cross-sectional view of the heat insulator 30 taken along the line D-D of FIG. 11. As illustrated in FIG. 11 and FIG. 12, the recessed portion 42 may be a groove formed in the surface 40a of the heat insulating sheet 40 to which the buffer sheet 50 is bonded, not a through hole. Reduction in heat insulating capacity of the heat insulator 30 is suppressed by forming the recessed portion 42 into a groove, not a through hole, as compared to a case where the recessed portion 42 is a through hole. As illustrated in FIG. 11, the recessed portion 42 may be formed into a lattice shape and extend to the peripheral portion of the heat insulating sheet 40. As described above, in a case where the recessed portion 42 is formed to extend to the peripheral portion of the heat insulating sheet 40, when the buffer sheet 50 is deformed to enter the recessed portion 42, the air staying in the recessed portion 42 can flow to the peripheral portion of the heat insulating sheet 40. That is, in the heat insulator 30 illustrated in FIG. 11, the recessed portion 42 also has a function of the ventilation passages 44 and 46 in the preferred embodiment described above.

The recessed portion 42 may be a groove formed into a circular shape, an elliptic shape, a rectangular shape, or the like. For example, in a form illustrated in FIG. 5, FIG. 9, or FIG. 10, the recessed portion 42 may be formed into a stop hole, instead of a through hole.

Note that, in the preferred embodiment described above, the buffer sheet 50 is bonded to one surface of the heat insulating sheet 40, but the heat insulating sheet 40 may be bonded to each of both surfaces of the buffer sheet 50. That is, the buffer sheet 50 may be arranged between two heat insulating sheets 40. At this time, the recessed portion 42 may be provided in each of both of the two heat insulating sheets 40, and may be provided in only one of the two heat insulating sheets 40. At this time, the protruding portion 52 may be provided on each of both surfaces of the buffer sheet 50, and may be provided on only one surface of the buffer sheet 50.

The buffer sheet 50 may be bonded to each of the both surfaces of the heat insulating sheet 40. That is, the heat insulating sheet 40 may be provided between two buffer sheets 50. At this time, the protruding portion 52 may be provided on each of both of the two buffer sheets 50, and may be provided on only one of the two buffer sheets 50. In a case where the recessed portion 42 is a groove, the recessed portion 42 may be provided in each of the both surfaces of the heat insulating sheet 40, and may be provided in only one surface of the heat insulating sheet 40.

The technology disclosed herein has been described above in various forms. However, the preferred embodiments described above or the like shall not limit the present invention, unless specifically stated otherwise. Various changes can be made to the technology disclosed herein, and each of components and processes described herein can be omitted as appropriate or can be combined with another one or other ones of the components and the processes as appropriate, unless a particular problem occurs. The present specification includes disclosure set forth in the following items.

First Item: A heat insulator that is arranged between an adjacent pair of battery cells of a battery module, the heat insulator including a heat insulating sheet, and a buffer sheet bonded to the heat insulating sheet, in which the buffer sheet is formed of a material that can be more easily compressively deformed than the heat insulating sheet, and the heat insulating sheet includes a recessed portion in a surface to which the buffer sheet is bonded.

Second Item: The heat insulator according to the first item, in which the recessed portion is formed of a through hole that passes through the heat insulating sheet.

Third Item: The heat insulator according to the first item, in which the recessed portion is a groove formed in a surface to which the buffer sheet is bonded.

Fourth Item: The heat insulator according to any one of the first to third items, in which the heat insulating sheet includes a ventilation passage that connects the recessed portion and a peripheral portion of the heat insulating sheet.

Fifth Item: The heat insulator according to any one of the first to fourth items, in which the buffer sheet includes a protruding portion that protrudes on a surface at an opposite side to the surface bonded to the heat insulating sheet.

Sixth Item: The heat insulator according to the fifth item, in which a portion of the protruding portion overlaps with the recessed portion when viewed from front.

Seventh Item: The heat insulator according to any one of the first to sixth items, in which the buffer sheet includes a positioning projecting portion that protrudes on a surface bonded to the heat insulating sheet, and the heat insulating sheet includes a positioning hole in which the positioning projecting portion is inserted.

Eighth Item: A battery module including multiple battery cells each of which includes a pair of broad width surfaces and that are arranged such that the broad width surfaces are opposed to each other, and the heat insulator according to any one of the first to seventh items arranged between an adjacent pair of battery cells.

## Claims

1. A heat insulator (30) that is arranged between an adjacent pair of battery cells (12) of a battery module (10), the heat insulator (30) comprising:
a heat insulating sheet (40); and
a buffer sheet (50) bonded to the heat insulating sheet (40),
wherein
the buffer sheet (50) is formed of a material that can be more easily compressively deformed than the heat insulating sheet (40), and
the heat insulating sheet (40) includes a recessed portion (42) in a surface (40a) to which the buffer sheet (50) is bonded.

2. The heat insulator (30) according to claim 1, wherein
the recessed portion (42) is formed of a through hole that passes through the heat insulating sheet (40).

3. The heat insulator (30) according to claim 1, wherein
the recessed portion (42) is a groove formed in a surface (40a) to which the buffer sheet (50) is bonded.

4. The heat insulator (30) according to any one of claims 1 to 3, wherein
the heat insulating sheet (40) includes a ventilation passage (44) that connects the recessed portion (42) and a peripheral portion of the heat insulating sheet (40).

5. The heat insulator (30) according to any one of claims 1 to 4, wherein
the buffer sheet (50) includes a protruding portion (52) that protrudes on a surface (50b) at an opposite side to the surface (50a) bonded to the heat insulating sheet (40).

6. The heat insulator (30) according to claim 5, wherein
a portion of the protruding portion (52) overlaps with the recessed portion (42) when viewed from front.

7. The heat insulator (30) according to any one of claims 1 to 6, wherein
the buffer sheet (50) includes a positioning projecting portion (54) that protrudes on a surface (50a) bonded to the heat insulating sheet (40), and
the heat insulating sheet (40) includes a positioning hole (48) in which the positioning projecting portion (54) is inserted.

8. A battery module (10) comprising:
multiple battery cells (12) each of which includes a pair of broad width surfaces (12a) and that are arranged such that the broad width surfaces (12a) are opposed to each other; and
the heat insulator (30) according to any one of claims 1 to 7 arranged between an adjacent pair of battery cells (12).
